# EUROPEAN PATENT APPLICATION

(11) **EP 0 654 720 A1**
(43) Date of publication of application: **24.05.1995**
(21) Application number: 94118186.9
(22) Date of filing: 18.11.1994
(51) Int. Cl.: G05B 19/042

(54) **Programmer for washing machine comprising a microprocessor that detects the state of electromechanical contacts**

(30) Priority: 19.11.1993 IT TO930867
(71) Applicant: BITRON "A" S.p.A., I-10060 Cantalupa (Torino) (IT)
(72) Inventor: Mandara, Francescopaolo, I-10134 Torino (IT)
(74) Representative: Dini, Roberto, Dr. Ing.

(57) **Abstract**

A hybrid type programmer comprising a microprocessor is described, for washing machines, in particular dish-washing machines; the main characteristic of the described programmer consists in that the microprocessor periodically receives amounts of information, concerning the state of a single electromechanical switch, commanded by a cam, activating a certain organ, and elaborates such information in order to control the advancement of the machine's operative program.

## Description

This invention refers to a hybrid type programmer comprising a microprocessor, for washing machines, in particular dish-washing machines.

Normally dish-washing machines are equipped with a programmer, or timer, of an electromechanical type, wherein a series of cams are commanded by a micro-motor and determine, by way of the opening and closure of electric contacts, the functioning of the various organs of the machine, such as the washing pump, the drainage pump, the water charging solenoid valves, the heating resistor, etc; the electromechanical timers are very complicated; they require slow cams, fast cams and various ratchets.

Dish-washing machines are also known equipped with fully electronic programmers, controlled by a microprocessor; the main drawback of electronic timers consists in the necessity of providing a non volatile memory, and the relative management of transients, for remembering without problems the advancement position reached, in the case of interruption of the power supply.

So called hybrid programmers are also known, i.e. of a combined type, mechanical and electronic, in which appropriate codification contacts are used, in a sufficient number for supplying the electronic part (microprocessor) with information on the angular position reached by the mechanical timer; such contacts can for example be of 5 or 6 in number.

For example, it is known from the European patent application n. 0̸ 252 816 a hybrid mechanical and electronic timer for a laundry washing machine; in such timer a microprocessor controls by means of a triac the step by step advancement of the micro-motor of the timer, which with its cams, normally provides to activate and deactivate the pumps, the heating resistor and the electro-valves; the microprocessor receives information, obtained by summing the voltage present at the ends of three suitable electromechanical codification contacts, so as to know the position reached; the microprocessor, by way of a second triac, controls the rotation motor of the laundry drum.

Such timer however, besides requiring three codification contacts, does not appear to be able to manage a plurality of different programs.

The aim of the present invention is that of illustrating how it is possible to realise a hybrid type programmer for a washing machine, in particular a dish-washing machine, that, without requiring codification contacts, allows the electronic management of the advancement of a sufficient number of different programs.

For reaching such purposes the subject of the present invention is a hybrid type programmer comprising a microprocessor, for washing machines, in particular dish-washing machines, characterised in that the microprocessor periodically receives information, concerning the state of a single electromechanical switch, commanded by a cam, activating a certain organ, and elaborates such information in order to control the advancement of the machine's operative program.

Further characteristics and advantages of the present invention will result in being clear from the following description and annexed drawings, supplied purely as an explanatory and non-limiting example, wherein:
- figure 1 represents the electric diagram of a programmer for dish-washing machines according to the invention;
- figure 2 schematically represents the advancement of programs and functions of the programmer of figure 1.

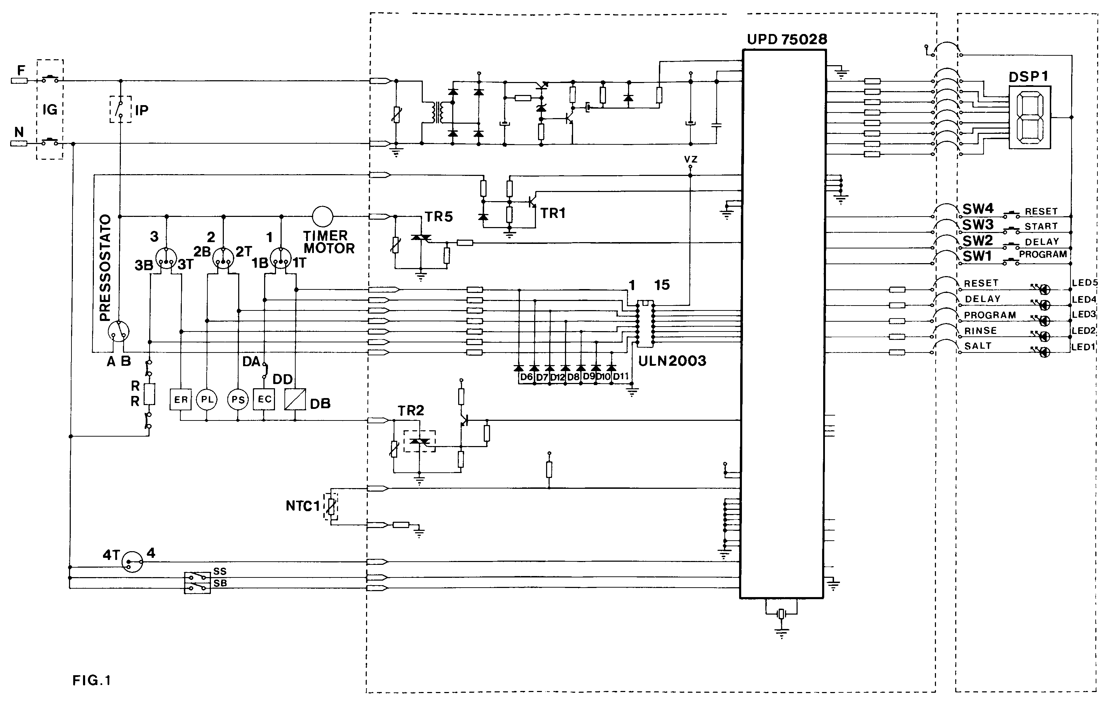

In figure 1 the electric diagram of a programmer is represented for dish-washing machines according to the invention; in the left part of the figure the electromechanical part of the device is represented; in the central part a dotted rectangle encompasses the electronic part of the programmer; finally in the right part of the figure another smaller dotted rectangle encompasses the command and display part.

In the upper left hand part of figure 1 the two terminals of the electric supply network are represented, marked F (phase) and N (neutral); the general switch IG follows; the two mains wires then enter the central part, where a supply circuit lowers the voltage to 15 volt and then to 5 volts for supplying the rest of the circuit.

Still in the left part of the figure three electric change-over switches are represented, marked with numbers 1, 2 and 3; they are commanded by the cams, not represented, of the timer, and connect six actuator elements and more precisely:
- the heating resistor (RR), contact 3B;
- the electro-valve of the resins regenerator (ER), contact 3T;
- the washing pump (PL), contact 2B;
- the drainage pump (PS), contact 2T;
- the charge electro-valve (EC), contact 1B;
- the distributor of the detergent or brightener (DD/DB), contact 1T.

Furthermore the double-throw switch of the pressure switch and the step contact 4T are represented.

The electric contacts 1B, 1T, 2B, 2T, 3B, 3T, 4 and a contact of the pressure switch are connected to the central part of the device and precisely to the same number of terminals of a microprocessor UPD750̸28; the contact 4 is directly connected, while other contacts are connected to the microprocessor by way of an integrated circuit ULN20̸0̸3, comprising a number of amplifying transistors.

The second contact of the pressure switch (second level) is connected to a terminal of the microprocessor by way of a transistor TR1;

A thermistor (NTC1) is also connected from a side to the microprocessor and from the other side to the earth.

The microprocessor is also connected to two triacs (TR5 and TR2) that respectively supply the first the motor of the timer (Timer motor) and the second the five actuators (excluding the heating resistor).

The right part of the figure indicates a seven segments display (DSP1); four command keys (SW1, SW2, SW3, SW4) and five indicating diodes (LED1...LED5).

The microprocessor reads, at least once per step, the voltage at the ends of each of the nine contacts (change-over switches 1, 2, 3, 4 and pressure switch); it therefore has all the information for knowing the advancement position with the necessary precision; the microprocessor establishes the duration of every single phase, and eventually provides to "skip" the phases that do not have to be carried out in that particular program.

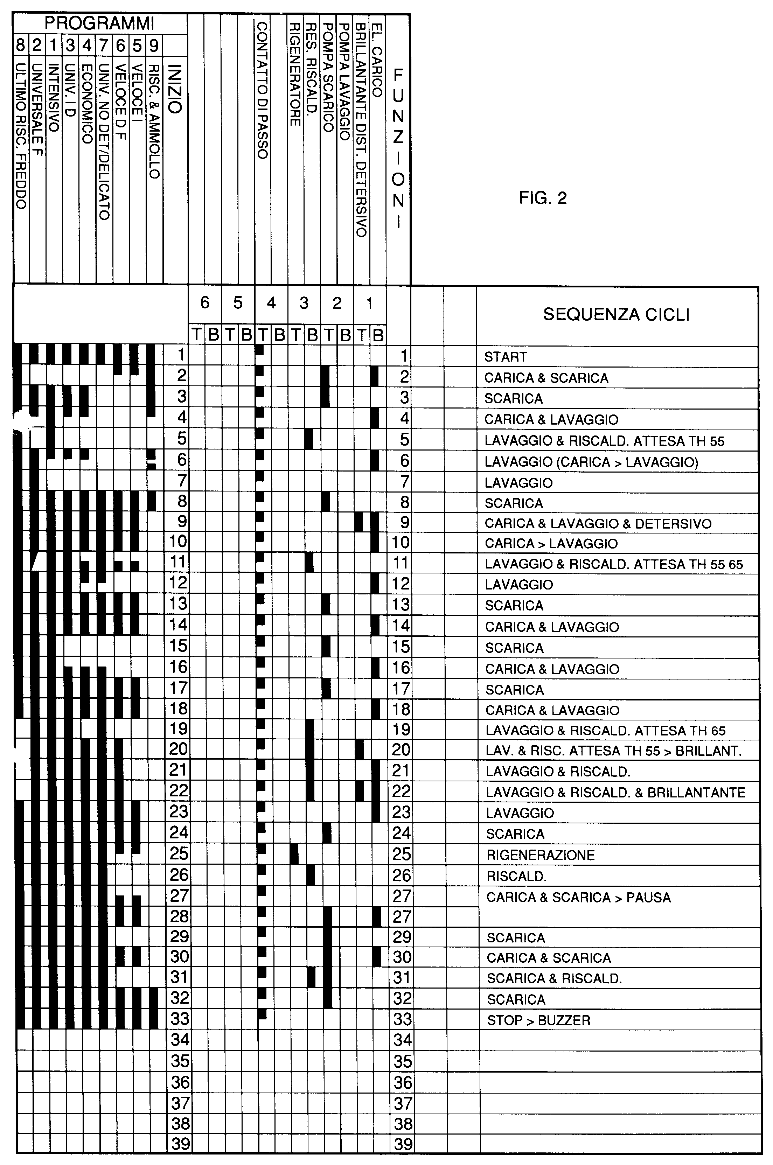

Figure 2 schematically represents the programs advancement and the functions of the programmer of figure 1; to the left of figure 2 nine different programs are shown; in the central part 33 different phases are shown; for each of which on the right appears the name of the actual phase.

For example it can be seen that in program 5 phases 3-7 (discharge, charging and washing, washing and heating, washing and charging, washing) are "skipped"; this is obtained by the microprocessor blocking the triac TR2, during such phases, that furthermore are activated in rapid sequence one after the other. The temperature of the water is established by the microprocessor based on the information which it obtains from the thermistor NTC1.

From the given description the characteristics of the programmer subject of the present invention are clear, as are clear its advantages.

In particular the programmer according to the invention is relatively cheap, and is also able to control washing programs being rather sophisticated and complex.

It is clear that numerous variations can be introduced to the programmer subject of the present invention, without departing from the novelty principles inherent in the innovative idea, it is clear that in a practical realisation of the invention the materials and the forms of the illustrated details may be different, and can be replaced with technically equivalent elements.

## Claims

**1.** Hybrid type programmer comprising a microprocessor, for washing machines, in particular dish-washing machines, characterised in that the microprocessor (UPD750̸28) receives periodically amounts of information, concerning the state of a single electromechanical switch (1B;1T;2B;2T;3B;3T), commanded by a cam, activating a certain organ (EC,DD/DB,PL,PS,ER,RR), and elaborates such information in order to control the advancement of the machine's operative program.

**2.** Programmer, according to claim 1, characterised in that said microprocessor (UPD750̸28) controls the activation of a part of such organs (EC,DD/DB,PL,PS,ER) by means of a controllable switch (TR2).

**3.** Programmer, according to claim 2, characterised in that said microprocessor (UPD750̸28) controls in such a way the eventual skipping of one or more phases during the course of a program.

**4.** Programmer, according to claim 1 or 2, characterised in that said microprocessor (UPD750̸28) controls the activation of a cam advancement micro-motor (Timer Motor) by means of a second controllable switch (TR5), in particular in such a way it controls the duration of every single phase of the program.

**5.** Programmer, according to claim 4, characterised in that said microprocessor (UPD750̸28) receives further information, concerning the state of a further electromechanical switch (4T), commanded by a cam, and representing the step contact.

**6.** Programmer, according to one or more of the previous claims, characterised in that said microprocessor (UPD750̸28) receives further information, concerning the state of a further electromechanical switch (pressure switch), in particular said electromechanical switch (pressure switch) has two positions.

**7.** Programmer, according to one or more of the previous claims, characterised in that said microprocessor (UPD750̸28) receives further information, concerning the value of a thermistor element (NTC1) and that utilises said information for estimating the temperature reached by the water.

**8.** Programmer, according to one or more of the previous claims, characterised in that said microprocessor (UPD750̸28) provides to show on a display organ (DSP1) at least the information relative to the ongoing washing program.

**9.** Programmer, according to one or more of the previous claims, characterised in that said microprocessor (UPD750̸28) receives further information from command organs (SW1,SW2,SW3,SW4) available to the user.

**10̸.** Programmer, according to claim 2, characterised in that such controlled organs by said microprocessor (UPD750̸28) include a washing pump (PL) and/or a drainage pump (PS) and/or a charge electro-valve (EC) and/or a distributor of washing detergent or brightener (DD/DB) and/or a resin regeneration device (ER).

**11.** Programmer, according to one or more of the previous claims, characterised in that said microprocessor (UPD750̸28) receives said information concerning the state of said electromechanical switches at least once for every advancement step.
